# EUROPÄISCHE PATENTANMELDUNG

(11) **EP 2 311 889 A1**
(43) Veröffentlichungstag der Anmeldung: **20.04.2011**
(21) Anmeldenummer: 09173297.4
(22) Anmeldetag: 16.10.2009
(51) Int. Cl.: C08F 136/06, C08L 9/00

(54) **Neodym-katalysierte Polybutadiene**

(71) Anmelder: LANXESS Deutschland GmbH, 51369 Leverkusen (DE)
(72) Erfinder: Kloppenburg, Heike, 40625, Düsseldorf (DE); Steinhauser, Norbert, 40789, Monheim (DE)

(57) **Zusammenfassung**

Die Erfindung betrifft ein hochmolekulares, lineares , Neodym-katalysiertes Polybutadien mit einem hohen Anteil an cis-1,4- Einheiten von > 95% und einem geringen Anteil an 1,2-Vinyl-Gehalt von <1 % sowie mit kleiner Molmassenverteilungsindex (MVI), wobei das Polybutadien
- eine Mooneyviskosität (ML₁₊₄ 100°C) von 70 - 90 und
- eine Molmassenverteilungsindex von kleiner als 10

aufweist.

## Beschreibung

Die vorliegende Erfindung betrifft hochmolekulare, lineares, Neodym-katalysierte Polybutadiene mit einem hohen Anteil an cis-1,4-Einheiten von > 95 % und einem geringen Anteil an Vinyl-Einheiten von < 1 % sowie einem kleinen Molmassenverteilungsindex (MVI), deren Herstellungsverfahren und Verwendung.

Polybutadiene werden als wichtige Bestandteile von Kautschukmischungen in der Reifenindustrie eingesetzt, wobei eine Verbesserung der Endeigenschaften, wie etwa eine Reduktion des Rollwiderstandes und des Abriebes gewünscht wird. Ein weiteres Anwendungsfeld sind Golfballkeme oder Schuhsohlen, wobei hier eine hohe Rückprallelastizität im Vordergrund steht.

Polybutadiene mit einem hohen Anteil an cis-1,4-Einheiten werden seit längerer Zeit in großem technischen Maßstab produziert und für die Herstellung von Reifen und anderen Gummiwaren sowie zur Schlagzähmodifizierung von Polystyrol eingesetzt.

Zur Erzielung hoher Anteile an cis-1,4-Einheiten werden derzeit fast ausschließlich Katalysatoren auf Basis von Verbindungen der Seltenen Erden eingesetzt, und werden beispielsweise in EP-A1 0 011 184 und EP-B-A1 0 007 027 beschrieben.

Aus dem Stand der Technik ist bekannt, dass speziell Neodym-katalysierte Polybutadiene in der Gruppe der hoch-cis-Polybutadiene besonders vorteilhafte Eigenschaften hinsichtlich Rollwiderstand, Abrieb und Rückprallelastizität aufweisen.

Dem Fachmann ist bekannt, dass zur Herstellung von Polybutadienen mit enger Polydispersität strukturell definierte single site Katalysatoren auf Basis von Allyl-Komplexen der Seltenen Erden eingesetzt werden, wie sie beispielsweise in Macromolecular Chemistry and Physics, 2002 (203/7) 1029-1039 beschrieben sind.

Bei der Herstellung von Polybutadienen spielen die eingesetzten Katalysatorsysteme eine wichtige Rolle.

Der technisch eingesetzte Neodymkatalysator beispielsweise ist ein Ziegler/Natta-System, das aus mehreren Katalysatorkomponenten gebildet wird. Bei der Katalysatorbildung werden meist unterschiedliche Katalysatorzentren gebildet, die sich im Polymer anhand einer mindestens bimodalen Molmassenverteilung erkennen lassen. Im Ziegler/Natta-Katalysatorsystem werden die bekannten 3 Katalysatorkomponenten, meist bestehend aus einer Neodymquelle, einer Chloridquelle und einer Aluminiumorganischen Verbindung in verschiedenster Art und Weise unter bestimmten Temperaturbedingungen vermischt, wobei das Katalysatorsystem mit oder ohne Alterung für die Polymerisation vorbereitet wird.

Aus dem Stand der Technik sind mehrere Herstellungsverfahren für Ziegler/Natta-Katalysatorsysteme bekannt, welche zur Herstellung von Polybutadienen eingesetzt werden.

EP 0 375 421 B1 beschreibt ein Verfahren zur Herstellung eines Katalysators für die Polymerisierung von Butadien, wobei Aluminiumkohlenwasserstoff oder Aliminiumkohlenwasserstoffhydrid, Neodymneodecanoat oder Neodymnaphthenat und eine Halogenquelle in einer Kohlenwasserstofflösung (Hexan) bei einer Temperatur von -15°C bis -60°C vermischt werden, wobei das Katalysatorsystem für eine Dauer von mindestens 8 Stunden gealtert wird, bevor es für die Polymerisation verwendet wird. Die Alterung wird bei vorzugsweise -20°C durchgeführt.

US-A 5,686,371 offenbart ein Verfahren zur Polymerisation eines oder mehrerer konjugierter Diene, in dem das Katalysatorsystem durch die Mischung eines Salzes einer Seltenen Erde, einer Organo-Aluminiumverbindung und einem Siliciumhalogenid oder Organosiliciumhalogenid in Anwesenheit von einem Dien bei einer Temperatur von 0 bis 30°C gebildet wird. Der Katalysator wird anschließend bei Raumtemperatur gealtert, bevor er für die Polymerisation eingesetzt wird.

WO 02/068484 beschreibt ein Verfahren, in dem die bekannten Katalysatorenkomponenten, wie oben beschrieben, bei einer Temperatur von -20°C bis 80°C direkt zu einer Butadien-Hexanlösung ohne vorherige Präformierung zugeführt werden und die Polymerisation in einem kontinuierlichen Prozess erfolgt.

EP 1 055 659 beschreibt ein Verfahren zur Herstellung von Nedymneodecanoat mit einem hohen Wassergehalt über 10.000 ppm als Katalysatorbestandteil für die Lösungspolymerisation von Butadien, wobei dieses Neodymdecanoat mit einem Alkylaluminium oder deren Hydridderivate, vorzugsweise Diisobutylaluminiumhydrid (DIBAH), bei einer Temperatur von 0 bis 18°C zusammengeführt wird. Die Zugabe von tert.-Butylchlorid als Chloridquelle wird bei Raumtemperatur zugefügt. Die Alterung dauert 30 Minuten bei gleicher Temperatur, bevor diese für die Polymerisation eingesetzt werden.

EP 0 076 535 beschreibt ebenfalls die Herstellung eines Neodymkatalysators, wobei die bekannten Katalysatorkomponenten bei einer Temperatur von 80°C zusammengefügt werden. Als Chlorkomponente wird tert-Butylchlorid eingesetzt. Eine Alterung, ohne explizit Angaben der Alterungsbedingungen zu nennen, wird erwähnt.

Aus dem Stand der Technik ist ebenfalls die EP 0 127 236 bekannt, in der der Katalysator durch die Vermischung von Neodymoxiden, Neodymalkoholaten und Carboxylaten mit einem Organometallhalogeniden sowie einer organischen Verbindung bei einer Temperatur von 20°C bis 25°C vermischt werden. Es ist auch möglich, die Vermischung dieser 4 Komponenten bei 50°C bis 80°C durchzuführen. Bei dieser Variante wird die Mischung auf 20 bis 25°C abgekühlt, sodann wird DIBAH zugefügt. Eine Alterung wird nicht erwähnt.

Aus EP 1 176 157 B1 ist ein Verfahren zur Herstellung von Polybutadienen mit verringertem Verhältnis Lösungsviskosität /Mooney-Viskosität bekannt, in dem die Katalysatorenherstellung mit Präformierung durchgeführt wird. Dabei wird zunächst das Neodymversatat mit DIBAH und Isopren bei 50°C vermischt, anschließend wird diese Mischung auf 5°C abgekühlt, danach wird Ethylaluminiumsesquichlorid (EASC) zugegeben. Die Alterung kann mehrere Minuten bis mehrere Tage dauern bei einer Temperatur zwischen 10 und -80°C. Während der Polymerisation werden Comonomeren, wie beispielsweise ein Bisdien, hinzugefügt, um den Verzweigungsgrad des Polymers zu erhöhen und somit auch das sehr enge Verhältnis Lösungsviskosität / Mooney-Viskosität zu erhalten. Das dabei erhaltene verzweigte Polymer hat pro Molekül durch die Kopplung über das Bisdien mindestens 4 freie Kettenenden, während lineare Moleküle nur 2 Kettenenden besitzen.

Die Anzahl der Kettenenden im Polymer ist für die Energiedissipation verantwortlich. Je höher die Anzahl an freien Kettenenden, desto höher ist die Energiedissipation durch das Polymer. Je geringer jedoch die Energiedissipation des Polymers ist, desto geringer ist beispielsweise der Rollwiderstand und desto besser ist die Rückprallelastizität des Polymers. Dementsprechend sind die Endeigenschaften eines linearen Polymers mit nur 2 Kettenenden pro Molekül immer besser als die eines verzweigten Polymers bei gleicher Molmasse.

Weiterhin sind Polymere mit hoher Molmasse vor Polymeren mit geringer Molmasse bevorzugt.

Es ist bekannt, dass kommerziell erhältliche Polybutadiene normalerweise Molmassen mit einem zahlenmäßigen Mittel Mn zwischen 150.000 und 400.000 g/mol besitzen. Die tatsächlichen Molmassenverteilung des Polymers werden meist in einer GPC-Kurve dargestellt und erstrecken sich über einen sehr großen Bereich, der meist weit über einer Dekade Unterschied liegt.

Molmassen mit einem zahlenmäßigen Mittel Mn unter 100.000 g/mol sind besonders nachteilig, da sie wegen ihrer kurzen Molmasse statistisch keine gute Einbindung in das Polymernetzwerk haben und somit die Energieaufnahme durch eine erhöhte freie Beweglichkeit der gesamten Polymerkette zusätzlich verschlechtern.

Molmassen mit einem zahlenmäßigen Mittel Mn über 1.000.000 g/mol erhöhen dagegen exponentiell die Lösungsvikosität des Polymers; die Löslichkeit des Polymers wird somit verringert. Nachteilig an hohen Molmassen ist somit, dass die wirtschaftliche Herstellbarkeit dieser Polymeren behindert wird.

Denn ohne diese hochmolekularen Anteile im Polymer wird die Wandablagerung im Reaktor reduziert, d. h. die Gelbildung wird verringert und somit eine längere Reaktorstandzeit ermöglicht. Die Wartung und Reinigung der Reaktoren wird somit minimiert, was Zeit- und Kostenersparnis bedeutet.

Es ist bekannt, dass kommerziell hergestellte Polymere eine statistische Molmassenverteilung besitzen, wobei die Breite der Molmassenverteilung durch die Katalysatorherstellung beeinflusst wird.

Aufgabe der Erfindung bestand also darin, ein hochmolekulares und lineares Polybutadien bereitzustellen, welches durch eine niedrige Lösungsviskosität eine gute Herstellbarkeit in der Polymerisation ermöglicht und sich zudem durch eine lineare, hochmolekulare und einheitliche Polymerstruktur vorteilhaft auf die Gebrauchseigenschaften des Kautschuks auswirkt.

Zur Lösung der Aufgabe wird ein Polybutadien der eingangs genannten Art vorgeschlagen, welches eine Mooney-Viskosität (ML₁₊₄ 100°C) zwischen 70 und 90 und einen Molmassenverteilungsindex (MVI) von < 10 aufweist.

Vorzugsweise handelt es sich hierbei um Polybutadiene, die durch neodymhaltige Systeme katalysiert wurden. Derartige Systeme sind Ziegler-Natta-Katalysatoren auf Basis von Neodymverbindungen, die in Kohlenwasserstoffen löslich sind.

Als Neodymverbindung werden besonders bevorzugt Neodymcarboxylate oder Neodymalkoholate, insbesondere Neodymneodecanoat, Neodymoctanoat, Neodymnaphthenat, Neodym-2,2-diethyl-hexanoat und/oder Neodym-2,2-diethyl-heptanoat eingesetzt.

Es ist bekannt, dass eine möglichst kleine Polydispersität (PDI) hervorragende Eigenschaften in Reifenmischungen ergibt, wie z.B. einen niedrigen Rollwiderstand, eine hohe Rückprallelastizität oder einen niedrigen Reifenabrieb. Die Polydispersität wird in der Regel aus der Gel-Permeations-Chromatografie (GPC) bestimmt; sie entspricht dem Quotienten von gewichtsmäßiger mittlerer Molmasse Mw zu zahlenmäßig mittlerer Molmasse Mn und steht damit für die Breite der Verteilung der Molmassen.

Eine breite Verteilung der Molmassen zeigt ein gutes Verarbeitungsverhalten des Kautschuks und der Kautschukmischungen, was sich unter anderem in einer geringeren Mischungsviskosität, geringeren Mischzeit und niedrigeren Extrusionstemperaturen zeigt. Jedoch wird das Eigenschaftsprofil des Reifens nachteilig beeinflusst.

Umgekehrt beeinflusst eine kleine Polydispersität dementsprechend das Verarbeitungsverhalten des vorgenannten Polybutadiens.

Es hat sich jedoch herausgestellt, dass die Kennzahl PDI nicht ausreichend ist, um die tatsächlichen Eigenschaften des Polymeren zu beschreiben. Insbesondere die Grenzbereiche der Molmassenverteilung werden nicht angegeben, da der PDI nur ein Quotient der mittleren gewichtsmäßigen und zahlenmäßigen Molmassen angibt.

Aus diesem Grund wurde erfindungsgemäß der Molmassenverteilungsindex (MVI) eingeführt, welche aus der Gel-Permeations-Chromatografie bestimmt wird; er entspricht dem Quotienten von Mw (90%) zu Mw (10%) und beschreibt somit die Endeigenschaft des Polymers. Ein kleiner MVI < 10 bedeutet, dass das Polymer eine sehr enge Molmassenverteilung besitzt und somit eine einheitliche Netzwerkstruktur gebildet werden kann.

Das erfindungsgemäße Polybutadien weist damit die gewünschten hervorragenden Eigenschaften in Reifenmischungen auf.

Das erfindungsgemäße Polybutadien hat einen 1,4-cis-Gehalt von > 95%, bevorzugt > 96% und einen 1,2-vinyl-Gehalt von < 1%, bevorzugt < 0,8%, besonders bevorzugt < 0,7%.

Vorzugsweise weist das erfindungsgemäße Polybutadien eine Lösungsviskosität (RT, 5,43 % Toluol) von 350 bis 630 mPas, bevorzugt 400 bis 580 mPas auf.

Bevorzugt weist das erfindungsgemäße Polybutadien zudem einen Verzweigungsindex (VI) von 5 bis 7 auf. Der VI ist der Quotient von Lösungsviskosität zu Mooney-Viskosität. Bekanntermaßen nimmt bei strukturgleichen Polymeren die Lösungsviskosität proportional mit der Erhöhung der Mooney-Viskosität zu. Bei einer unterproportionalen Zunahme, also bei einem VI von kleiner als 5 wird die Lösungsvikosität durch Polymerverzweigungen reduziert, was die Linearität des Polymeren verringert und die unerwünschte Anzahl an freien Kettenenden erhöht. Eine überproportionale Zunahme, also ein VI von größer als 7 wird meist durch einen erhöhten Anteil an sehr hochmolekularen Polymerketten hervorgerufen und ist nachteilig auf die Herstellbarkeit des Polymeren.

Des Weiteren weist das erfindungsgemäße Polybutadien vorzugsweise eine Mooney-Relaxation nach 30 sec von kleiner als 6 % auf. Die Mooney-Relaxation wird durch das Abgleiten der Polymerketten nach der dynamischen Beanspruchung des Polymeren nach dem Ende der Mooneymessung hervorgerufen und gilt als Kennzeichen für die Linerarität des Polymeren. Die Molmassenverteilung des erfindungsgemäßen Polybutadiens liegt bei Mw 90% < 1.000.000 g/mol und Mw 10% >100.000 g/mol. Diese Molmassenverteilung ist für das erfindungsgemäße Polybutadien optimal, da es wie oben beschrieben eine gute Herstellbarkeit ermöglicht und zugleich die gewünschten guten Endeigenschaften im Polymeren garantiert.

Das erfindungsgemäße Polybutadien weist nicht nur einen verbesserten Rollwiderstand und eine erhöhte Rückprallelastizität auf, sondern auch eine verbesserte Herstellbarkeit, indem es zu weniger Wandablagerung im Reaktor, zu weniger Gelbildung und somit zu einer längeren Reaktorstandzeit führt. Die Wartung der Reaktoren wird somit minimiert, was zeit- und Kostenersparnis bedeutet.

Das erfindungsgemäße Polybutadien hat außerdem Vorteile beim Herstellungsprozess, beim Transport, bei Lagerung und Verarbeitung sowie die Eigenschaft zum Einsatz in Golfbällen oder in der Reifenherstellung.

Eine weitere Erfindung ist ein Verfahren zur Herstellung des erfindungsgemäßen Polybutadiens, wobei folgende Verfahrensschritte durchgeführt werden:
1. Modifizierte Katalysatorenherstellung mit Präformierung unter der Verwendung von Katalysatorsysteme basierend auf Neodym bestehend aus
   - Komponente A:: einem Alkoholat oder einem Carboxylat von Neodym, vorzugsweise Neodymversatat,
   - Komponente B:: einem Dialkylaluminiumhydrid, vorzugsweise Diisobutyl- aluminiumhydrid (DIBAH),
   - Komponente C:: einem Aluminiumtrialkyl, vorzugsweise Tributylaluminium (TIBA),
   - Komponente D:: einem Dien, vorzugsweise Butadien oder Isopren und
   - Komponente E:: und wenigstens einer Organometallhalognide, vorzugsweise Ethylaluminiumsesquichlorid (EASC),
   wobei zunächst in einem ersten Schritt die Komponenten A, B, C und D bei einer Temperatur von 0°C bis 80°C, bevorzugt von 30°C bis 60°C für einen Zeitraum von 5 Minuten bis 10 Stunden, bevorzugt von 20 Minuten bis 2 Stunden vermischt und die Mischung dann vor der Zugabe von Komponente E auf kleiner -10°C, bevorzugt auf kleiner -30°C abgekühlt wird;
2. Präformierung des modifizierten Katalysatorsystems bei einer Temperatur von -30°C bis 80 C, bevorzugt von 5°C bis 50°C für die Dauer von 1 bis 250 Stunden, vorzugsweise von 2 bis 100 Stunden;
3. Polymerisation der Monomere bei einer Temperatur zwischen -20 und 150°C.

Durch die erfindungsgemäße Verfahrensführung konnte ein Katalysatorsystem basierend auf Neodym gebildet werden, welches eine optimale Aktivität aufweist und zu den gewünschten oben genannten Eigenschaften des Polymers führt. Es ist ein Zusammenspiel der Menge und Wirkungsweise der Katalysatorbestandteile, welche die Endeigenschaften des Polymers und auch die Wirtschaftlichkeit des Herstellungsverfahrens bestimmt. Wird beispielsweise eine zu geringe Menge an Katalysator eingesetzt, steigt zwar die Molmasse und damit die Mooney-Viskosität des Polymere an, die Umsetzung des Monomers wird aber dementsprechend verlangsamt, was aus wirtschaftlicher Sicht nicht erwünscht ist.

Durch die Modifizierung, nämlich die Herabsenkung der Temperatur der Vermischung der Katalysatorenkomponenten A bis D vor der Zugabe der Chloridquelle E, konnte überraschenderweise auch durch das Zusammenwirken von DIBAH als Komponente B und TIBA als Komponente C ein Katalysatorsystem mit optimale Aktivität gebildet werden, welches für die Erreichung des erfindungsgemäßen Polybutadiens mit den vorgenannten Eigenschaften ausschlaggebend ist.

Vorzugsweise ist Komponente D das gleiche Monomer, welches zur Herstellung von hochmolekularen, Neodym-katalysierten Polybutadienen verwendet wird. Die Gegenwart des Diens bei der Katalysatorenherstellung ist besonders wichtig, da somit ein stabiler Katalysatorkomplex gebildet werden kann. Als Lösungsmittel kommt Hexan, Cyclohexan, Toluol oder ein Lösungsmittelgemisch der C6-Fraktion in Frage. Andere Lösungsmittel sind ebenso denkbar.

Das Lösungsmittel kann in reiner Form oder als Lösungsmittel der einzelnen Katalysatorkomponenten zugegeben werden. Die Menge des Lösungsmittels richtet sich nach der Komponente A, wobei die Konzentration der Komponente A zum Lösungsmittel zwischen 0,05 und 0,3 mol/L, bevorzugt zwischen 0,08 und 0,2 mol/L liegt.

Das Molverhältnis der Komponente A zur Komponente B beträgt 1:1 bis 1:100, bevorzugt 1:3 bis 1:80 und besonders bevorzugt 1:3 bis 1:50. Das Molverhältnis der Komponente A zur Komponente C beträgt 1:0,4 bis 1:15, bevorzugt 1:0,5 bis 1:8. Das Molverhältnis der Komponente A zur Komponente D beträgt 1:1 bis 1:200, bevorzugt 1:2 bis 1:100 und besonders bevorzugt 1:3 bis 1:50. Das Molverhältnis der Komponente A zur Komponente E beträgt 1:0,5 bis 1:20, bevorzugt 1:0,7 bis 1:10 und besonders bevorzugt 1:0,8 bis 1:8.

Die Abkühlungstemperatur im Schritt 1 der modifizierten Katalysatorenherstellung beträgt vorzugsweise -10 °C oder- 20 °C, bevorzugt -30 °C, besonders bevorzugt - 60°C. Dieser Schritt hat überraschenderweise zu einem Katalysatorsystem geführt, mit dem das erfindungsgemäße Polybutadien hergestellt werden kann.

Des Weiteren betrifft die Erfindung Kautschukmischungen enthaltend ein erfindungsgemäßes Polybutadien

Nachdem das Katalysatorsystem präformiert wurde, wird die Polymerisation in organischen Lösungsmitteln ausgeführt. Diese Lösungsmittel müssen inert gegenüber dem verwendeten Katalysatorsystem sein. Geeignet sind z.B. aromatische, aliphatische und cycloaliphatische Kohlenwasserstoffe wie Benzol, Toluol, Pentan, n-Hexan, iso-Hexan, Heptan und Cyclohexan.

Die Polymerisation kann sowohl kontinuierlich als auch diskontinuierlich durchgeführt werden.

Die Polymerisation wird bei einer Temperatur zwischen -20 und 150°C, bevorzugt zwischen 0 und 120°C, durchgeführt.

In einer üblichen Ausführungsform wird der Katalysator bestehend aus den Komponenten A, B, C, D und E einer Mischung von 100 Gew.-Teilen Lösungsmittel mit 5 bis 50 Gew.-Teilen, bevorzugt 8 bis 30 Gew.-Teilen Monomer zugesetzt.

Nach Erreichen des gewünschten Umsatzes wird der Katalysator durch Zusatz geringer Mengen beispielsweise an Wasser, Carbonsäuren oder Alkoholen deaktiviert.

Der Polymerlösung können vor der Aufarbeitung übliche Stabilisatoren in üblichen Mengen zugesetzt werden. Als Stabilisatoren werden z.B. sterisch gehinderte Phenole oder aromatische Amine oder Phosphite wie z.B. 2,6-Di-tert.Butyl-4,5-methyl-phenol verwendet.

Die Isolierung der Polymeren erfolgt durch Eindampfen der Polymerlösung, durch Fällen mit einem Nichtlösungsmittel wie beispielsweise Methanol, Ethanol, Aceton oder bevorzugt durch Wasserdampfdestillation des Lösungsmittels.

Nach dem Strippen mit Wasserdampf erfolgt die Wasserentfernung mit geeigneten Sieb- oder Schneckenaggregaten wie Expeller- bzw. Expander-Schnecken oder Fließbetttrockner.

Die Trocknung erfolgt nach den üblichen Verfahren, z.B. im Trockenschrank oder in einem Schneckentrockner.

Die erfindungsgemäßen Polybutadiene können alleine, im Verschnitt mit aromatischen oder aliphatischen Ölen oder im Gemisch mit anderen Kautschuken verwendet werden. Für die Herstellung von Kautschukvulkanisaten eignen sich als zusätzliche Kautschuke neben Naturkautschuk auch Synthesekautschuke. Bevorzugte Synthesekautschuke sind beispielsweise bei W. Hofmann, Kautschuktechnologie, Gentner Verlag, Stuttgart 1980 und I. Franta, Elastomers and Rubber Compounding Materials, Elsevier, Amsterdam 1989 beschrieben. Sie umfassen u.a.
- BR -: herkömmliches Polybutadien
- ABR -: Butadien/Acrylsäure-C1-C4-alkylester-Copolymere
- CR -: Polychloropren
- IR -: Polyisopren
- SBR: Styrol/Butadien-Copolymerisate mit Styrolgehalten von 1 bis 60, vorzugsweise 20 bis 50 Gew.-%
- IIR -: Isobutylen/Isopren-Copolymerisate
- NBR -: Butadien/Acrylnitril-Copolmere mit Acrylnitrilgehalten von 5 bis 60, vorzugsweise 10 bis 40 Gew.-%
- HNBR -: teilhydrierter oder vollständig hydrierter NBR-Kautschuk
- EPDM -: Ethylen/Propylen/Dien-Copolymerisate
sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie in der EP-A-0 447 066 beschrieben, Polybutadienkautschuk mit hohem 1.4-cis-Gehalt (>90 %), der mit Katalysatoren auf Basis Ni, Co, Ti oder Nd hergestellt wird, sowie Polybutadienkautschuk mit einem Vinylgehalt von 0 bis 75 % sowie deren Mischungen von Interesse.

Die Kautschukmischungen stellen einen weiteren Gegenstand der Erfindung dar und enthalten in der Regel 5 bis 300 Gew.-Teile eines aktiven oder inaktiven Füllstoffs, wie z.B.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m2/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen,
- synthetische Silikate, wie Aluminiumsilikat, Erdalkalisilikat wie Magnesiumsilikat oder Calciumsilikat, mit BET-Oberflächen von 20 bis 400 m2/g und Primärteilchendurchmessern von 10 bis 400 nm,
- natürliche Silikate, wie Kaolin und andere natürlich vorkommende Kieselsäure,
- Glasfasern und Glasfaserprodukte (Matten, Stränge) oder Mikroglaskugeln,
- Metalloxide, wie Zinkoxid, Calciumoxid, Magnesiumoxid, Aluminiumoxid,
- Metallcarbonate, wie Magnesiumcarbonat, Calciumcarbonat, Zinkcarbonat,
- Metallhydroxide, wie z.B. Aluminiumhydroxid, Magnesiumhydroxid,
- Metallsalze, wie z.B. Zink- oder Magnesiumsalze von [alpha],[beta]-ungesättigten Fettsäuren, wie z.B. Acryl- oder Methacrylsäure mit 3 bis 8 Kohlenstoffatomen, wie Zinkacrylat, Zinkdiacrylat, Zinkmethacrylat, Zinkdimethacrylat und Mischungen davon;
- Ruße. Die hierbei zu verwendenden Ruße sind nach dem Flammruß, Furnace- oder Gasrußverfahren hergestellt und besitzen BET-Oberflächen von 20 bis 200 m2/g, wie z.B. SAF-, ISAF-, HAF-, FEF- oder GPF-Ruße.
- Kautschukgele, insbesondere solche auf Basis Polybutadien, Butadien/StyrolCopolymere, Butadien/Acrylnitril-Copolymere und Polychloropren.

Besonders bevorzugt werden Zinkdiacrylate, hochdisperse Kieselsäuren und Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20, bevorzugt 0,1 bis 10 liegt.

Die Füllstoffe werden bevorzugt als Feststoffe oder als Aufschlämmung in Wasser oder einem Lösungsmittel zur Lösung des/der erfindungsgemäßen Polybutadiene hinzugegeben. Die Kautschuklösung kann vorher hergestellt werden, bevorzugt wird aber die aus der Polymerisation stammende Lösung direkt eingesetzt. Anschließend wird das Lösungsmittel thermisch oder bevorzugt mit Hilfe von Dampf entfernt. Die Bedingungen dieses Stripp-Prozesses lassen sich leicht durch Vorversuche ermitteln.

Weiterhin bevorzugt werden die Füllstoffe zum festen erfindungsgemäßen Polybutadien oder einem Gemisch aus Kautschuken hinzugegeben und auf bekannte Weise, z.B. mit einem Kneter, eingemischt.

Die erfindungsgemäßen Kautschukmischungen enthalten gegebenenfalls weiterhin Vernetzer. Als Vernetzer können Schwefel oder Peroxide eingesetzt werden, wobei Schwefel besonders bevorzugt wird. Die erfindungsgemäßen Kautschukmischungen können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol etc. die der Gummiindustrie bekannt sind.

In den bevorzugten Kautschukmischungen mit hochaktiven gefällten Kieselsäuren ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie in DE-A-2.141.159 und DE-A-2.255.577 beschrieben, oligomere und/oder polymere schwefelhaltige Silylether der DE-A-4.435.311 und EP-A-0 670 347, Mercaptoalkyltrialkoxisilane, insbesondere Mercaptopropyltriethoxisilan und Thiocyanatoalkylsilylether, wie z.B. in DE-A-195 44 469 beschrieben.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-%, bezogen auf Kautschuk.

Die weitere Abmischung der Kautschuke mit den anderen erwähnten Kautschukhilfsprodukten, Vernetzern und Beschleunigern kann in üblicher Weise mit Hilfe von geeigneten Mischaggregaten, wie Walzen, Innenmischer und Mischextruder, durchgeführt werden.

Die Compoundierung und Vulkanisation wird beispielsweise näher in Encyclopedia of Polymer Science and Engineering, Vol. 4, S. 66 ff (Compoundierung) und Vol. 17, S. 666 ff (Vulkanisation) beschrieben.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die erfindungsgemäßen Kautschukmischungen eignen sich hervorragend zur Herstellung von Formkörpern aller Art.

Nichtlimitierende Beispiele dieser Formkörper sind O-Ringe, Profile, Dichtungen, Membranen, Reifen, Reifenlaufflächen, Dämpfelemente und Schläuche.

Besonders bevorzugt werden verschiedene Reifenbauteile und Reifenlaufflächen.

Weiterhin eignen sich die erfindungsgemäßen Kautschukmischungen zur Schlagzähmodifikation von Thermoplasten, insbesondere für Polystyrol und Styrol-/Acrylnitrilcopolymere.

Besonders geeignet ist die Verwendung der Kautschukmischungen für Golfbälle, insbesondere Golfballkerne.

Nachstehend wird die Erfindung anhand von Beispielen näher erläutert.

### Beispiele

### Beispiel 1: Polymerisation von Butadien mit Katalysatorpräformierung

### Katalysatorherstellung und Präformierung:

In ein trockenes, mit Argon inertisiertes Schlenkgefäss wurden 4,26 mL (24 mmol) Diisobutylaluminiumhydrid, 3,03 mL (12 mmol) Trisobutylaluminium, 1,2 mL (12 mmol) Isopren, sowie 11,3 mL (3 mmol) einer 0,265-molaren Lösung von Neodymversatat in Hexan eingebracht. Es wurde 90 min bei 50 °C gerührt. Anschließend wurde die Lösung mit Trockeneis abgekühlt und beim Erreichen von -30 °C wurden 8 mL (2 mmol) einer 0,25-molaren Lösung von Ethylaluminiumsesquichlorid in Hexan zugegeben. Die präformierte Katalysatorlösung wurde über Nacht bei Raumtemperatur stehen gelassen und dann für die Polymerisation eingesetzt.

### Polymerisation:

Ein trockener, mit Argon inertisierter 1,9 L-Glasautoklav wurde mit 595 g Hexan (über Molsieb getrocknet) sowie 1,12 mL (1,12 mmol) einer 1-molaren Lösung von Triisobutylaluminium in Hexan, 1,71 mL (0,18 mmol Nd) der oben beschriebenen präformierten Katalysatorlösung und 124 g Butadien befüllt. Es wurde auf 65 °C erwärmt und unter Rühren 2 h polymerisiert. Anschließend wurden 549 g der viskosen Lösung abgelassen, und es wurden 2 mL Methanol sowie 0,6 g Bis[3-<t>butyl-2-hydroxy-5-methylphenyl]methan eingerührt. Danach wurde das Polymer bei 70 °C im Vakuum getrocknet. Auswaage nach dem Trocknen: 87 g
Mooney-Viskosität (ML 1+4 bei 100 °C): 81 MU; ML-Relax 30sec: 5,4 %
Lösungsviskosität (5,43 % in Toluol, bei Raumtemperatur): 518 mPas; VI: 6,4
Molmassenverteilung: w(10%) = 122000 g/mol; w(90%) = 933000 g/mol,
MVI: 7,6;
Mn: 255000 g/mol; Mw: 487000 g/mol.

### Vergleichsbeispiel 2: Polymerisation ohne Katalysatorpräformierung

Ein trockener, mit Argon inertisierter 1,9 L-Glasautoklav wurde mit 555 g Hexan (über Molsieb getrocknet), 1,03 mL einer 1 molaren Lösung von Diisobutylaluminiumhydrid in Hexan, 1,67 mL einer 0,618 molaren Lösung von Trisobutylaluminium in Hexan, 3,45 mL einer 0,05-molaren Lösung von Neodymversatat in Hexan, 3,45 mL einer 0,05-molaren Lösung von Ethylaluminiumsesquichlorid in Hexan und 130 g Butadien befüllt. Es wurde auf 65 °C erwärmt und unter Rühren 2 h polymerisiert. Anschließend wurden 568 g der viskosen Lösung abgelassen, und es wurden 2 mL Methanol sowie 0,6 g Bis[3-<t>butyl-2-hydroxy-5-methylphenyl]methan eingerührt. Danach wurde das Polymer bei 70 °C im Vakuum getrocknet.
Auswaage nach dem Trocknen: 96 g
Mooney-Viskosität (ML 1+4 bei 100 °C): 77 MU; ML-Relax 30sec: 6,9 %
Lösungsviskosität (5,43 % in Toluol, bei Raumtemperatur): 725 mPas; VI: 9,4
Molmassenverteilung: w(10%) = 85000 g/mol, w(90%) = 1070000 g/mol;
MVI: 12,6;
Mn: 199000 g/mol; Mw: 520000 g/mol.

### Vergleichsbeispiel 3: Polymerisation von Butadien mit Katalysatorpräformierung, ohne TIBA

### Katalysatorherstellung und Präformierung:

In ein trockenes, mit Argon inertisiertes Schlenkgefäss wurden 7,5 mL (42 mmol) Diisobutylaluminiumhydrid, 1,2 mL (12 mmol) Isopren, sowie 11,3 mL (3 mmol) einer 0,265-molaren Lösung von Neodymversatat in Hexan eingebracht. Es wurde 90 min bei 50 °C gerührt. Anschliessend wurde auf 5 °C abgekühlt und es wurden 8 mL (2 mmol) einer 0,25-molaren Lösung von Ethylaluminiumsesquichlorid in Hexan zugegeben. Die präformierte Katalysatorlösung wurde über Nacht bei Raumtemperatur stehen gelassen und dann für die Polymerisation eingesetzt.

### Polymerisation:

Ein trockener, mit Argon inertisierter 1,9 L-Glasautoklav wurde mit 580 g Hexan (über Molsieb getrocknet), 1,68 mL der oben beschriebenen präformierten Katalysatorlösung und 120 g Butadien befüllt. Es wurde auf 65 °C erwärmt und unter Rühren 3 h polymerisiert. Anschließend wurden 616 g der viskosen Lösung abgelassen, und es wurden 2 mL Methanol sowie 0,6 g Bis[3-<t>butyl-2-hydroxy-5-methylphenyl]methan eingerührt. Danach wurde das Polymer bei 70 °C im Vakuum getrocknet. Auswaage nach dem Trocknen: 103 g
Mooney-Viskosität (ML 1+4 bei 100 °C): 44 MU; ML-Relax 30sec: 5,2 %
Lösungsviskosität (5,43 % in Toluol, bei Raumtemperatur): 278 mPas; VI: 6,3
Molmassenverteilung: w(10%) = 82000 g/mol; w(90%) = 783000 g/mol;
MVI: 9,7;
Mn: 279000 g/mol; Mw: 387000 g/mol.

### Mischungsprüfung

Für die Herstellung eines Compounds wird jeweils das erfindungsgemäße Polymer aus Beispiel 1 und das Polymer aus Vergleichsbeispiel 3 mit verschiedenen Substanzen vermischt und vulkanisiert. Anschließend werden die physikalischen Eigenschaften des jeweiligen Compounds bestimmt und miteinander verglichen.

Für die Mischungsstudien wurden folgende Substanzen eingesetzt:
Corax N 236 als Ruß von KMF Laborchemie Handels GmbH, Vivatec 500 als Öl von Hansen & Rosenthal; Zinkweiss Rotsiegel als Zinkoxid von Grillo Zinkoxid GmbH; EDENOR C 18 98-100 als Stearinsäure von Cognis Deutschland GmbH; Vulkanox® 4020/LG und Vulkanox® HS/LG als Stabilisatoren sowie Vulkacit® CZ/C als Kautschukchemikalien von Lanxess Deutschland GmbH, Antilux 654 als Stabilisator und RHENOGRAN IS 60-75 als Schwefel von Rhein Chemie.

| | **Beispiel 1** | **Vergleichsbeispiel 3** |
|---|---|---|
| **Mischungsbestandteile in phr* (g pro 100 g Polymer):** | | |
| **Beispiel 1** | 100 | |
| **Vergleichsbeispiel 3** | | 100 |
| CORAX N 326 | 50 | 50 |
| VIVATEC 500 | 4 | 4 |
| EDENOR C 18 98-100 | 3 | 3 |
| VULKANOX 4020/LG | 2 | 2 |
| VULKANOX HS/LG | 3 | 3 |
| ZINKWEISS ROTSIEGEL | 2 | 2 |
| RESIN SP-1068 | 3 | 3 |
| ANTILUX 654 | 2 | 2 |
| VULKACIT CZ/EGC | 1,4 | 1,4 |
| RHENOGRAN IS 60-75 | 2,36 | 2,36 |

| | | |
|---|---|---|
| * phr = parts per hundred rubber | | |

| | | **Beispiel 1** | **Vergleichsbeispiel 3** |
|---|---|---|---|
| **Prüfung** | **Einheit** | | |
| ML 1+4/100 | ME | 80 | 52 |
| Härte ShA @ 60°C | | 61 | 61 |

| **Zug-Dehung @ 23°C** | | | |
|---|---|---|---|
| S300 | MPa | 5,6 | 5,3 |
| D median | % | 526 | 514 |
| F median | MPa | 14,7 | 13,1 |
| **Rückprallelastizität** | | | |
| @ 23°C | % | 62 | 55 |
| @ 60°C | % | 65 | 63 |

| **MTS Amplitude Sweep @ 60°C, 1 Hz** | | | |
|---|---|---|---|
| G* (0,5%) 1.Messung | MPa | 2,05 | 2,26 |
| G* (0,5%) 2.Messung | MPa | 1,98 | 2,13 |
| G* (0,5%) 3.Messung | MPa | 1,97 | 2,12 |
| G* (15%) 1.Messung | MPa | 1,13 | 1,11 |
| G* (15%) 2.Messung | MPa | 1,14 | 1,11 |
| G* (15%) 3.Messung | MPa | 1,14 | 1,11 |
| tan d (max.) 1.Messung | | 0,16 | 0,181 |
| tan d (max.) 2.Messung | | 0,16 | 0,181 |
| tan d (max.) 3.Messung | | 0,16 | 0,180 |

Beide Compounds haben nach der Vulkanisation die gleiche Härte und sind somit direkt miteinander vergleichbar. Im Zug-Dehnungstest zeigt sich im Beispiel 1 gegenüber Vergleichsbeispiel 3 eine Verbesserung der dynamischen Eigenschaften; erkennbar an einer größeren Zugfestigkeit (F median) und einer größeren Zugdehnung (D median).

Das erfindungsgemäße Beispiel 1 zeigt gegenüber dem Vergleichsbeispiel 3 eine deutliche Verbesserung in der Rückprallelastizität. Im MTS-Test weist Beispiel 1 gegenüber Vergleichsbeispiel 3 einen geringeren Maximalwert im Verlustfaktor Tangens Delta (tan d) als Zeichen für eine verringerte Energieaufnahme durch das Polymer auf, so dass auf einen deutlich verringerten Rollwiderstand von Beispiel 1 gegenüber Vergleichsbeispiel 3 geschlossen werden kann.

## Patentansprüche

**1.** Hochmolekulares, lineares, Neodym-katalysiertes Polybutadien mit einem hohen Anteil an cis-1,4- Einheiten von > 95% und einem geringen Anteil an 1,2-Vinyl-Gehalt von <1% sowie mit kleiner Molmassenverteilungsindex (MVI), **dadurch gekennzeichnet, dass** das Polybutadien
- eine Mooneyviskosität (ML ₁₊₄ 100°C) von 70 - 90 und
- eine Molmassenverteilungsindex von kleiner als 10
aufweist.

**2.** Polybutadien nach Anspruch 1, **dadurch gekennzeichnet, dass** die Lösungsviskosität (RT, 5,43 % Toluol) 350 bis 630 mPas, bevorzugt 400 bis 580 mPas beträgt.

**3.** Polybutadien nach Anspruch 2, **dadurch gekennzeichnet, dass** der Verzweigungsindex (VI) zwischen 5 und 7 liegt.

**4.** Polybutadien nach Anspruch 3, **dadurch gekennzeichnet, dass** es eine Mooney-Relaxation nach 30 sec (ML-Relax 30sec) von kleiner als 6 % aufweist.

**5.** Polybutadien nach Anspruch 4, **dadurch gekennzeichnet, dass** es eine Molmassenverteilung von Mw 90% < 1.000.000 g/mol und Mw 10% >100.000 g/mol aufweist.

**6.** Verfahren zur Herstellung von hochmolekularen, Neodym-katalysierten Polybutadienen gemäß einem der vorstehenden Ansprüche umfassen folgende Verfahrensschritte:
1) Modifizierte Katalysatorenherstellung mit Präformierung unter der Verwendung von Katalysatorsysteme basierend auf Neodym bestehend aus
Komponente A: einem Alkoholat oder einem Carboxylat von Neodym, vorzugsweise Neodymversatat,
Komponente B: einem Dialkylaluminiumhydrid, vorzugsweise Diisobutylaluminiumhydrid (DIBAH),
Komponente C: einem Aluminiumtrialkyl, vorzugsweise Tributylaluminium,
Komponente D: einem Dien, vorzugsweise Butadien oder Isopren und
Komponente E: und wenigstens einer Organometallhalognide, vorzugsweise Ethylaluminiumsesquichlorid (EASC),
wobei zunächst in einem ersten Schritt die Komponenten A, B, C und D bei einer Temperatur von 0°C bis 80°C, bevorzugt von 30°C bis 60°C für einen Zeitraum von 5 Minuten bis 10 Stunden, bevorzugt von 20 Minuten bis 2 Stunden vermischt und die Mischung dann vor der Zugabe von Komponente E auf kleiner -10°C, bevorzugt auf kleiner -30°C abgekühlt wird;
2) Präformierung des modifizierten Katalysatorsystems bei einer Temperatur von -30°C bis 80 C, bevorzugt von 5°C bis 50°C für die Dauer von 1 bis 250 Stunden, vorzugsweise von 2 bis 100 Stunden;
3) Polymerisation der Monomere bei einer Temperatur zwischen -20 und 150°C.

**7.** Verfahren nach Anspruch 6, **dadurch gekennzeichnet, dass** Komponente D vorzugsweise das gleiche Monomer ist, welches zur Herstellung von hochmolekularen, Neodym-katalysierten Polybutadienen verwendet wird.

**8.** Verfahren nach Anspruch 7, **dadurch gekennzeichnet, dass** das Molverhältnis der Komponente A zur Komponente B beträgt 1:1 bis 1:100, bevorzugt 1:3 bis 1:80 und besonders bevorzugt 1:3 bis 1:50, das Molverhältnis der Komponente A zur Komponente C beträgt 1:0,4 bis 1:15, bevorzugt 1:0,5 bis 1:8, das Molverhältnis der Komponente A zur Komponente D beträgt 1:1 bis 1:200, bevorzugt 1:2 bis 1:100 und besonders bevorzugt 1:3 bis 1:50 und das Molverhältnis der Komponente A zur Komponente E beträgt 1:0,5 bis 1:20, bevorzugt 1:0,7 bis 1:10 und besonders bevorzugt 1:0,8 bis 1:8.

**9.** Kautschukmischungen enthaltend ein Polybutadien gemäß Anspruch 5.

**10.** Verwendung der Kautschukmischungen gemäß Anspruch 9 zur Herstellung von Formkörpern aller Art.

**11.** Verwendung gemäß Anspruch 10, **dadurch gekennzeichnet, dass** der Formkörper ein Reifenbauteil ist.

**12.** Verwendung der Kautschukmischungen gemäß Anspruch 9 für die Schlagzähmodifikation von Thermoplasten.

**13.** Verwendung der Kautschukmischungen gemäß Anspruch 9 für Polystyrol und Styrol/Acrylnitril-Copolymere.

**15.** Verwendung der Kautschukmischungen gemäß Anspruch 9 für Golfbälle.
